# EUROPÄISCHE PATENTSCHRIFT

(11) **EP 2 415 648 B1**
(45) Veröffentlichungstag und Bekanntmachung des Hinweises auf die Patenterteilung: **24.12.2014**
(21) Anmeldenummer: 11175633.4
(22) Anmeldetag: 27.07.2011
(51) Int. Cl.: B60T 17/04, F16K 31/00, F16L 25/00

(54) **Zugfahrzeugkupplung**
Towing vehicle connector
Connecteur d'un véhicule de traction

(30) Priorität: 02.08.2010 DE 102010038766
(43) Veröffentlichungstag der Anmeldung: 08.02.2012
(73) Patentinhaber: DEERE & COMPANY, Moline, Illinois 61265-8098 (US)
(72) Erfinder: Kneer, Bernd, 68519 Viernheim (DE); Mayer, Klaus, 64754 Hesseneck-Kailbach (DE)
(74) Vertreter: Reichert, Christian

(56) Entgegenhaltungen:
- EP-A1- 1 580 043
- US-A- 5 677 667
- US-A1- 2005 189 761
- US-A1- 2008 012 695

## Beschreibung

Die Erfindung betrifft ein Zugfahrzeug mit einer fahrzeugseitigen Kupplungseinrichtung, zum Ankoppeln einer anhängerseitigen Kupplungseinrichtung einer Anhängerbremsanlage, einer von einer ansteuerbaren Antriebseinheit antreibbaren Druckquelle für die Anhängerbremsanlage und einer elektronischen Steuereinheit, zum Ansteuern der Antriebseinheit.

Bei halbdurchgehenden Bremsanlagen, wie sie beispielsweise an landwirtschaftlichen Traktoren aufzufinden sind, werden im Gegensatz zu durchgängigen Bremsanlagen, wie sie beispielsweise bei Lastkraftwagen aufzufinden sind, zwei unabhängig voneinander betriebene Energiequellen angeordnet, wobei eine einer Zugfahrzeugbremsanlage und die andere einer Anhängerbremsanlage zugeordnet ist. Ferner ist es bekannt, Zugfahrzeuge, wie beispielsweise landwirtschaftliche Traktoren, Lastkraftwagen, Sattelschlepper, Baufahrzeuge oder andere zum Schleppen oder Ziehen vorgesehene Fahrzeuge, mit fahrzeugseitigen Kupplungseinrichtungen für Anhängerbremsanlagen zu versehen, an welche beim Ankoppeln des Anhängers eine entsprechende anhängerseitige Kupplungseinrichtung der Anhängerbremsanlage angekoppelt werden kann. Durch Verbinden der fahrzeugseitigen und anhängerseitigen Kupplungseinrichtungen kann eine Druck führende Verbindung zwischen Zugfahrzeug und Anhänger hergestellt werden, durch welche beispielsweise eine Anhängerbremsanlage druckgesteuert bzw. pneumatisch betrieben werden kann. Die erforderliche Druckluft wird durch einen am Zugfahrzeug befindlichen Kompressor erzeugt, welcher durch eine Antriebseinrichtung, beispielsweise durch einen mit dem Motor des Zugfahrzeugs verbundenen Riementrieb, angetrieben wird. Es ist üblich, den für eine Anhängerbremsanlage benötigten Systemdruck dauerhaft am Zugfahrzeug bereitzustellen, unabhängig davon, ob ein Anhänger angekoppelt ist oder nicht. Zwecks Energie- bzw. Kraftstoffeinsparung wird der Kompressor jedoch nur dann betrieben, wenn der Systemdruck für die Anhängerbremsanlage unter einen vorgebbaren Sollwert sinkt. Diesbezüglich können entsprechende Sensoren und Druckbegrenzungseinrichtungen vorgesehen sein, in Abhängigkeit derer der mittels einer elektronischen Steuereinheit ansteuerbare Kompressor ein- bzw. ausgeschaltet werden kann. So wird bei Erreichen eines vorgebbaren Systemdrucks der Kompressor ausgeschaltet. Auch wenn kein Anhänger am Zugfahrzeug angekoppelt ist, fällt beispielsweise durch Betätigen der Bremsanlage des Zugfahrzeugs oder durch betriebsbedingte Leckagen am Zugfahrzeugs der Systemdruck für die Anhängerbremsanlage ab. Der Systemdruck wird dann wieder durch angesteuertes Einschalten des Kompressors auf das vorgesehene Sollwertniveau angehoben. Dies führt dazu, dass der Kompressor während des Betriebs des Zugfahrzeugs immer wieder eingeschaltet wird, auch wenn kein Anhänger an das Zugfahrzeug gekoppelt ist, was zu überflüssigen Energieverlusten führt und zu Lasten des Kraftstoffverbrauchs geht.

Eine gattungsgemässe Zugfahrzeug-Anhängerverbindung ist in EP 1 580 043 A1 beschrieben.

Die der Erfindung zugrunde liegende Aufgabe wird darin gesehen, ein Zugfahrzeug der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Zugfahrzeug der eingangs genannten Art derart ausgebildet, dass die fahrzeugseitige Kupplungseinrichtung einen ersten mit der Steuereinheit verbundenen Sensor umfasst, mit welchem eine Ankopplung einer anhängerseitigen Kupplungseinrichtung an die fahrzeugseitige Kupplungseinrichtung detektierbar und in dessen Abhängigkeit die Antriebseinheit durch die Steuereinheit ansteuerbar ist. Die Antriebseinheit zum Antreiben der Druckquelle wird dadurch nur noch angesteuert bzw. die Druckquelle antreibend betrieben, wenn der Sensor ein entsprechendes Signal liefert, das belegt, dass eine anhängerseitige Kupplungseinrichtung an der fahrzeugseitigen Kupplungseinrichtung angekoppelt bzw. angeschlossen ist. Das heißt, die Druckquelle zum Betreiben einer Anhängerbremsanlage bzw. zur Erzeugung eines Systemdrucks für eine Anhängerbremsanlage wird nur dann betrieben, wenn auch wirklich ein Anhänger an das Zugfahrzeug angekoppelt ist. Somit werden für ein Zugfahrzeug mit halbdurchgehender Bremsanlage unnötige bzw. überflüssige Energieverluste, die durch Bereitstellung eines Systemdrucks für die Anhängerbremsanlage während des Betriebs des Zugfahrzeugs ohne Anhänger entstehen, vermieden. Die Kupplungseinrichtungen sind üblicherweise mit einer Art Dreh- bzw. Bajonettverschluss versehen, so dass die beiden Kupplungseinrichtungen durch eine Drehbewegung miteinander verspannbar sind. Diesbezüglich können jedoch auch andere für Druckluftsysteme übliche Verbindungen, beispielsweise Steckverbindungen, Anwendung finden. Der erste Sensor kann beispielsweise direkt an der fahrzeugseitigen Kupplungseinrichtung als mechanischer Tast- oder Kontaktsensor bzw. -schalter angeordnet sein. Diesbezüglich können jedoch auch elektrische, elektromagnetische oder auch optische Sensoren eingesetzt werden. Sobald eine anhängerseitige Kupplungseinrichtung zum Anschließen einer Bremsdruckleitung angeschlossen wird, wird durch den Sensor ein entsprechendes Signal an die elektronische Steuereinheit geliefert, welche wiederum ein entsprechendes Steuersignal zur Ansteuerung der Antriebseinheit generiert. In Folge dessen, wird dann ein entsprechender Systemdruck für eine Anhängerbremsanlage aufgebaut.

Die fahrzeugseitige Kupplungseinrichtung kann ferner einen zweiten mit der Steuereinheit verbundenen Sensor umfassen, mit welchem eine Ankopplung einer anhängerseitigen Kupplungseinrichtung an die fahrzeugseitige Kupplungseinrichtung detektierbar ist. Der zweite Sensor kann beispielsweise direkt an der fahrzeugseitigen Kupplungseinrichtung als mechanischer Tast- oder Kontaktsensor bzw. -schalter angeordnet sein. Diesbezüglich kann jedoch auch ein elektrischer, elektromagnetischer oder auch optischer Sensor eingesetzt werden. Der zweite Sensor kann beispielsweise zur Signalisierung einer Korrekten Ankopplung des Anhängerbremssystems dienen und ist derart angeordnet, dass er erst ein Signal auslöst, wenn die Verbindung der beiden Kupplungseinrichtungen vollständig hergestellt ist.

Es kann ferner eine Signaleinrichtung vorgesehen sein, welche durch die Steuereinheit ansteuerbar ist. Dadurch kann beispielsweise einer Bedienperson in einer Kabine des Zugfahrzeugs in Abhängigkeit des ersten, zweiten oder beider Sensoren signalisiert werden, dass eine Verbindung der beiden Kupplungseinrichtungen korrekt und vollständig durchgeführt wurde. So kann bei Ankopplung eines Anhängers an das Zugfahrzeug die Aktivierung der Ansteuerung für die Antriebseinheit der Druckquelle durch den ersten Sensor vorgenommen werden und ferner durch den zweiten Sensor eine übergeordnete Kontrolleinrichtung eingerichtet werden. Beispielsweise kann bei Auslösen eines Signals durch den ersten Sensor und gleichzeitiges Auslösen eines Signals durch den zweiten Sensor eine Kontrolllampe in der Kabine aktiviert oder ein Kontrollton generiert werden, der auf eine korrekte Ankopplung des Anhängerbremssystems hinweist. Andererseits kann eine Fehlermeldung signalisiert werden, sollte beispielsweise nur der erste Sensor ein Signal und der zweite Sensor kein entsprechendes Signal auslösen. Ferner kann auch ein Kontrollsignal von der elektronischen Steuereinheit generiert werden, falls beide Sensoren kein entsprechendes Signal liefern, dass dann darauf hinweist, dass das Anhängerbremssystem nicht angeschlossen ist. Die Signaleinrichtung kann dabei sowohl eine optische Anzeige als auch eine akustische Anzeige umfassen.

Die Antriebseinheit für die Druckquelle kann einen hydraulischen, elektrischen oder mechanischen Antrieb umfassen. Beispielsweise kann ein Riementrieb vorgesehen sein, der von einem Verbrennungsmotor des Zugfahrzeugs angetrieben wird. Es kann jedoch auch ein vom Verbrennungsmotor unabhängiger Antrieb in Form eines von einem Generator gespeister Elektromotor oder auch ein Hydraulikmotor vorgesehen sein.

Die Antriebseinheit für die Druckquelle kann eine ansteuerbare Kupplung umfassen, durch welche ein Antriebsmoment eines Antriebs beliebiger Art auf die Druckquelle übertragen werden kann bzw. unterbrochen werden kann. Beispielswise kann eine elektromagnetische Kupplung angeordnet sein, die von der elektronischen Steuereinheit angesteuert werden kann. Es können jedoch auch andere Arten von Kupplungen, beispielsweise mechanischer oder elektromechanischer Natur, eingesetzt werden, die über entsprechende von der Steuereinheit ansteuerbare Stellglieder verfügen.

Die Druckquelle kann einen Druckluftkompressor umfassen, der von einem Antrieb der oben genannten Art mit oder ohne zwischenangeordneter Kupplung antreibbar ist. Durch den Druckluftkompressor wird ein für die Anhängerbremsanlage benötigter Systemdruck erzeugt. Zur Speicherung der Druckluft wird bei angeschlossenem Anhänger ein Druckluftbehälter oder - speicher von der Druckluftquelle aufgeladen, um den für eine Bremsung benötigten Systemdruck entsprechend schnell bereitstellen zu können. Anstelle des Kompressors kann auch ein anderes Druckluft erzeugendes Aggregat bzw. Mittel eingesetzt werden.

Die Druckquelle und die Steuereinheit können mit Sensormittel verbunden sein, in dessen Abhängigkeit eine Ansteuerung der Antriebseinheit durch die Steuereinheit erfolgen kann. Es kann beispielsweise bei angekoppeltem Anhänger eine Systemdrucküberwachung durch die Sensormittel vorgenommen werden, um ein entsprechendes Signal zur Ansteuerung der Antriebseinheit der Druckquelle bei unzureichender Versorgung zu generieren bzw. um den Systemdruck auf einen bestimmten Sollwert zu halten bzw. anzuheben. So kann bei einem zu niedrig signalisierten Systemdruck beispielsweise die Kupplung der Antriebseinheit geschlossen und ein entsprechendes Antriebsmoment zum Antreiben des Kompressor übertragen werden.

Die Sensormittel können beispielsweise ein Druckregelventil und/oder einen Druckschalter umfassen und sind mit einer Bremsdruckleitung verbunden, in der ein geforderter Systemdruck aufgebaut werden soll bzw. welche mit einem entsprechend geforderten Systemdruck beaufschlagt sein soll. Hat sich der geforderte Systemdruck eingestellt oder ist dieser unter ein bestimmtes Druckniveau abgesunken, so wird über das Druckregelventil und den Druckschalter ein entsprechendes Signal zur Ansteuerung der Antriebseinheit generiert. So kann beispielsweise bei ausreichendem Systemdruck ein Signal zum Öffnen der Kupplung der Antriebseinheit und bei zu niedrigem Systemdruck ein Signal zum Schließen der Kupplung generiert werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Rückseitenansicht eines Zugfahrzeugs mit einer Kupplungseinrichtung für ein Anhängerbremssystem,
- Fig. 2: eine perspektivische Detailansicht der fahrzeugseitigen Kupplungseinrichtung aus Figur 1 und
- Fig. 3: einen schematischen Schaltplan zur Ansteuerung einer Antriebseinheit einer Druckquelle für das Anhängerbremssystem.

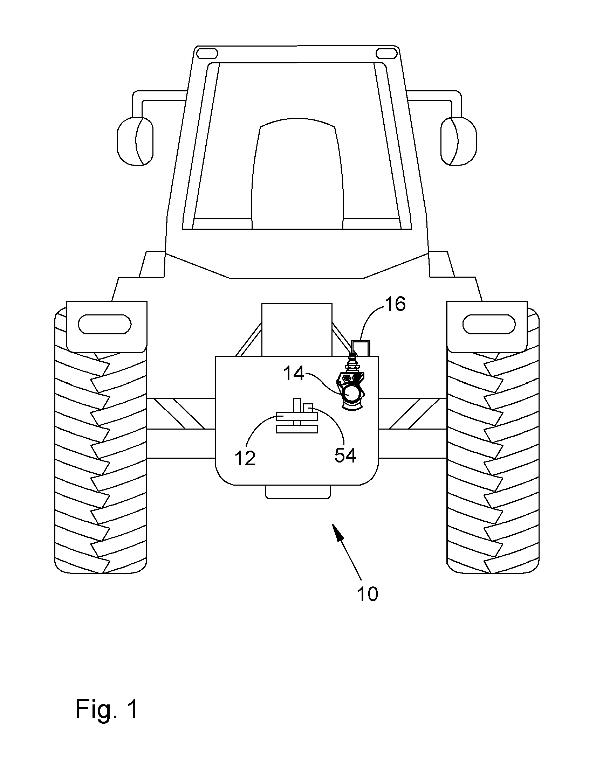

Figur 1 zeigt die Rückseite eines Zugfahrzeugs 10 in Form eines landwirtschaftlichen Schleppers mit halbdurchgehender Bremsanlage. Das Zugfahrzeug 10 weist eine Anhängerkupplung 12, zum Anhängen eines Anhängers (nicht gezeigt) sowie eine fahrzeugseitige Kupplungseinrichtung 14 auf, die zum Anschließen einer anhängerseitigen Kupplungseinrichtung (nicht gezeigt) einer an einem Anhänger (nicht gezeigt) befindlichen Anhängerbremsanlage (nicht gezeigt) dient. Die Kupplungseinrichtung 14 ist mit einer die Anhängerbremsanlage mit einem Systemdruck (Druckluft) versorgenden Bremsdruckleitung 16 verbunden.

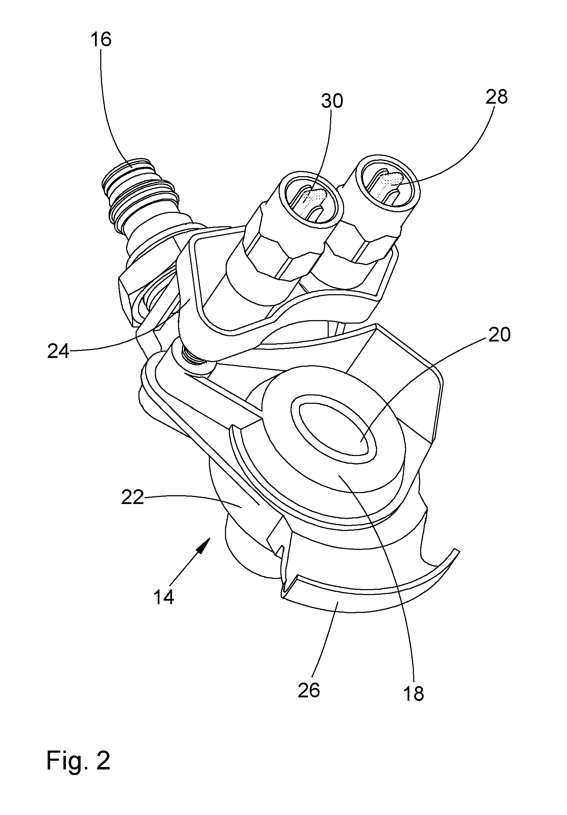

Wie in Figur 2 besonders gut zu sehen ist, weist die fahrzeugseitige Kupplungseinrichtung 14 eine Anschlussfläche 18 auf, in die eine Ventilöffnung 20 mündet, welche zu einem die Bremsdruckleitung 16 verschließenden Anschlussventil 22 zugehörig ist. Ferner sind am Randbereich der Anschlussfläche 18 bajonettverschlussartige obere und untere Verriegelungslaschen 24, 26 ausgebildet, die mit gegensätzlichen, an einer anhängerseitigen Kupplungseinrichtung ausgebildeten Verriegelungslaschen (nicht gezeigt) durch Drehbewegung gegeneinander verspannbar sind. Auf eine detaillierte Schilderung der Kupplungseinrichtungen kann verzichtet werden, da es sich um im Stand der Technik bekannte Anschlusskuppler handelt, die allgemein gebräuchlich an Zugfahrzeugen mit Anhängerkupplung Verwendung finden. An der oberen Verriegelungslasche 24 sind ein erster und ein zweiter Kontaktsensor 28, 30 angeordnet, die mit einer der gegensätzlichen Verriegelungslaschen der anhängerseitigen Kupplungseinrichtung in Kontakt gebracht werden, sobald die fahrzeugseitige und anhängerseitige Kupplungseinrichtung 14 miteinander verspannt werden bzw. die Anhängerbremsanlage an das Zugfahrzeug angeschlossen wird. Wie in Figur 2 zu sehen ist, sind die beiden Sensoren 28, 30 an den Seitenbereichen der oberen Verriegelungslasche 24 nebeneinander angeordnet. Dadurch wird erreicht, dass beim Ankoppeln des Anhängers die Verriegelungslasche der anhängerseitigen Kupplungseinrichtung zuerst über den ersten Sensor 28 geführt wird und dann erst zu dem zweiten Sensor 30 gelangt, der dann erst mit der gegensätzlichen Verriegelungslasche der anhängerseitigen Kupplungseinrichtung in Kontakt tritt, wenn die Drehbewegung bei der Verriegelung (Bajonettverriegelung) nahezu vollständig ausgeführt wurde bzw. wenn die fahrzeugseitigen Verriegelungslaschen 24, 26 und die anhängerseitigen Verriegelungslaschen nahezu flächendeckend miteinander verspannt sind. Wird die Verriegelung nicht vollständig vorgenommen (Verriegelungslaschen der beiden Kupplungseinrichtungen werden nur teilweise (also nicht flächendeckend) gegeneinander verspannt), so kommt nur ein Kontakt der anhängerseitigen Verriegelungslasche mit dem ersten Sensor 28 zustande, jedoch nicht mit dem zweiten Sensor 30. In diesem Fall würde bei Betreiben des Zugfahrzeugs ein Fehlersignal generiert und signalisiert werden.

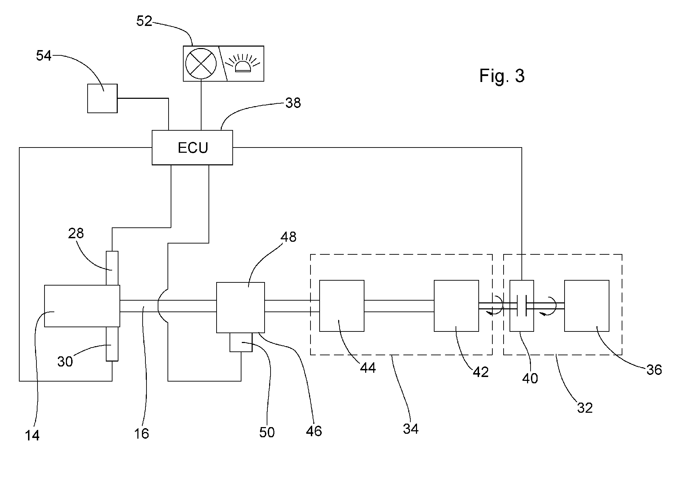

Figur 3 zeigt einen schematischen Schaltplan zur Ansteuerung einer Antriebseinheit 32 für eine Druckquelle 34. Die Antriebseinheit 32 umfasst einen Antrieb 36, beispielsweise einen von einem Motor des Zugfahrzeugs 10 angetriebenen Riementrieb oder einen elektrischen oder hydraulischen Antrieb, und eine von einer elektronischen Steuereinheit 38 ansteuerbare Kupplung 40. Die ansteuerbare Kupplung 40 ist beispielsweise als elektromagnetische Kupplung ausgebildet und kann durch entsprechende Steuersignale, die von der elektrischen Steuereinheit 38 generierbar sind, geöffnet bzw. geschlossen werden. Die Druckquelle 34 umfasst einen Druckluftkompressor 42 und einen damit verbundenen Druckspeicher 44, welcher einen erforderlichen Systemdruck in der Bremsdruckleitung 16 bereitstellt. In der Bremsdruckleitung 16 sind ferner Sensormittel 46 angeordnet, welche eine in der Bremsdruckleitung 16 vorherrschenden Systemdruck detektieren und ein entsprechendes Signal an die elektronische Steuereinheit 38 liefern. Die Sensormittel umfassen beispielsweise ein Druckregelventil 48 und einen damit verbundenen Druckschalter 50.

Des Weiteren ist eine Signaleinrichtung 52 vorgesehen, die mit der Steuereinheit 38 verbunden ist und entsprechende Kontroll-und/oder Fehlersignale an eine Bedienperson des Zugfahrzeugs 10 signalisiert.

Die Kupplung 40 wird von der elektrischen Steuereinheit 38 geschlossen, sobald zum einen eine Anhängerbremsanlage über eine anhängerseitige Kupplungseinrichtung an die fahrzeugseitige Kupplungseinrichtung 14 ordnungsgemäß angeschlossen ist und zum anderen der Systemdruck in der Bremsdruckleitung 16 entsprechend unterhalb eines erforderlichen Sollwerts liegt. Das Ankuppeln bzw. Anschließen an die Kupplungseinrichtung 14 wird von dem ersten Sensor 28 detektiert und ein entsprechendes Signal an die Steuereinheit 38 geliefert, welche ein Steuersignal zum Öffnen der Kupplung 40 sendet. Ferner wird ein ordnungsgemäßes, vollständiges (flächendeckendes) Ankuppeln durch den zweiten Sensor detektiert und ein entsprechendes zweites Signal an die Steuereinheit 38 geliefert, welche ein entsprechendes Kontrollsignal an die Signaleinrichtung 52 sendet. Die Signaleinrichtung bringt das Kontrollsignal, beispielsweise in Form einer Signallampe oder eines Kontrolltons, zur Anzeige. Bei fehlerhaftem bzw. unvollständigem Ankoppeln der Kupplungseinrichtungen, wenn also nur der erste Sensor ein Signal liefert und das Signal des zweiten Sensors ausbleibt, wird ein entsprechendes Fehlersignal, beispielsweise in Form einer Signallampe oder eines Alarmtons, zur Anzeige gebracht. Ferner kann vorgesehene sein, dass ein weiterer Sensor 54 an der Anhängerkupplung vorgesehen ist, der das Vorhandensein eines angekoppelten Anhängers an die Steuereinheit signalisiert. Sollte ein derartiges Signal von dem weiteren Sensor 54 und gleichzeitig keine Signale vom ersten und zweiten Sensor 28, 30 an die Steuereinheit 38 geliefert werden, würde dies darauf schließen lassen, dass zwar ein Anhänger aber keine Anhängerbremsanlage angeschlossen wurde. Diesbezüglich kann ebenfalls ein entsprechendes Fehlersignal (bzw. Kontrollsignal, (falls keine Anhängerbremsanlage erforderlich bzw. vorhanden ist) generiert und zur Anzeige gebracht werden. Bei angeschlossener Anhängerbremsanlage bzw. verbundener Kupplungseinrichtung 14 (durch die Sensoren 28 und 30 signalisiert), wird über die Sensormittel 46 der Systemdruck in der Bremsdruckleitung 16 erfasst. Sollte dieser unterhalb eines vorgegebenen Sollwerts liegen bzw. absinken, so wird dies ebenfalls der elektronischen Steuereinheit 38 signalisiert. Erst dann generiert die elektronische Steuereinheit ein entsprechendes Signal zum Schließen der Kupplung 40 (wenn also die Sensoren 28, 30 zusammen mit den Sensormitteln 46 entsprechende Signale liefern), so dass die Druckquelle 34 angetrieben wird, bis der geforderte Systemdruck in der Bremsdruckleitung 16 (wieder) erreicht ist. Sobald der entsprechende Systemdruck erreicht ist, wird dies der elektronischen Steuereinheit durch die Sensormittel 46 signalisiert und ein entsprechendes Signal zum Öffnen der Kupplung 40 generiert.

Die Kupplung 40 wird von der elektrischen Steuereinheit 38 in geöffneter Stellung gehalten, sobald keine Anhängerbremsanlage angeschlossen ist bzw. wenn dies durch die Sensoren 28, 30 entsprechend signalisiert wird.

Anstelle der Kupplung 40 kann auch ein direkter von der Steuereinheit ansteuerbarer Antrieb, beispielsweise ein Elektro- oder Hydraulikmotor, vorgesehen sein, so dass die Antriebseinheit 32 nur einen direkt ansteuerbaren Antrieb umfasst. Entsprechend würde dieser analog den Signalen zum Schließen der Kupplung 40 aktiviert bzw. analog den Signalen zum Öffnen der Kupplung 40 deaktiviert werden.

Ein gemäß obigem Schema ausgebildetes Zugfahrzeug 10 stellt sicher, dass der für eine Anhängerbremsanlage am Zugfahrzeug angeordnete Druckluftkompressor nur angesteuert bzw. aktiviert bzw. in Betrieb genommen wird, wenn auch wirklich eine Anhängerbremsanlage am Zugfahrzeug angeschlossen ist. Dadurch werden unnötige Inbetriebnahmen des Kompressors bei Systemdruckabfall in der Bremsleitung 16 bzw. im Anhängerbremssystem vermieden und damit Energie und Kraftstoff gespart.

## Patentansprüche

1. Zugfahrzeug (10) mit einer fahrzeugseitigen Kupplungseinrichtung (14), zum Ankoppeln einer anhängerseitigen Kupplungseinrichtung einer Anhängerbremsanlage, einer von einer ansteuerbaren Antriebseinheit (32) antreibbaren Druckquelle (34) für die Anhängerbremsanlage und einer elektronischen Steuereinheit (38), zum Ansteuern der Antriebseinheit (32), **dadurch gekennzeichnet, dass** die fahrzeugseitige Kupplungseinrichtung (14) einen ersten mit der Steuereinheit (38) verbundenen Sensor umfasst (28), mit welchem eine Ankopplung einer anhängerseitigen Kupplungseinrichtung an die fahrzeugseitige Kupplungseinrichtung (14) detektierbar und in dessen Abhängigkeit die Antriebseinheit (32) durch die Steuereinheit (38) ansteuerbar ist.

2. Zugfahrzeug (10) nach Anspruch 1, **dadurch gekennzeichnet, dass** die fahrzeugseitige Kupplungseinrichtung (14) einen zweiten mit der Steuereinheit (38) verbundenen Sensor (30) umfasst, mit welchem eine Ankopplung einer anhängerseitigen Kupplungseinrichtung an die fahrzeugseitige Kupplungseinrichtung (14) detektierbar ist.

3. Zugfahrzeug (10) nach einem der vorhergehenden Ansprüche, **dadurch gekennzeichnet, dass** eine Signaleinrichtung (52) vorgesehen ist, welche durch die Steuereinheit (38) ansteuerbar ist.

4. Zugfahrzeug (10) nach einem der vorhergehenden Ansprüche, **dadurch gekennzeichnet, dass** die Antriebseinheit (32) einen hydraulischen, elektrischen oder mechanischen Antrieb (36) umfasst.

5. Zugfahrzeug (10) nach einem der vorherigen Ansprüche, **dadurch gekennzeichnet, dass** die Antriebseinheit (32) eine ansteuerbare Kupplung (40) umfasst.

6. Zugfahrzeug (10) nach einem der vorherigen Ansprüche, **dadurch gekennzeichnet, dass** die Druckquelle (34) einen Druckluftkompressor (42) umfasst.

7. Zugfahrzeug (10) nach einem der vorherigen Ansprüche, **dadurch gekennzeichnet, dass** mit der Druckquelle (34) und der Steuereinheit (38) verbundene Sensormittel (46) vorgesehen sind, in dessen Abhängigkeit eine Ansteuerung der Antriebseinheit (32) durch die Steuereinheit (38) erfolgbar ist.

8. Zugfahrzeug nach Anspruch 6, **dadurch gekennzeichnet, dass** die Sensormittel (46) ein Druckregelventil (48) und/oder einen Druckschalter (50) umfassen.

## Claims

1. Towing vehicle (10) having a vehicle-side coupling device (14), for coupling a trailer-side coupling device of a trailer brake system, a pressure source (34), which can be driven by an actuable drive unit (32), for the trailer brake system and an electronic control unit (38) for actuating the drive unit (32), **characterized in that** the vehicle-side coupling device (14) comprises a first sensor (28) which is connected to the control unit (38) and with which coupling of a trailer-side coupling device to the vehicle-side coupling device (14) can be detected, and as a function of which the drive unit (32) can be actuated by the control unit (38).

2. Towing vehicle (10) according to Claim 1, **characterized in that** the vehicle-side coupling device (14) comprises a second sensor (30) which is connected to the control unit (38) with which coupling of a trailer-side coupling device to the vehicle-side coupling device (14) can be detected.

3. Towing vehicle (10) according to one of the preceding claims, **characterized in that** a signal device (52), which can be actuated by the control unit (38), is provided.

4. Towing vehicle (10) according to one of the preceding claims, **characterized in that** the drive unit (32) comprises a hydraulic, electric or mechanical drive (36).

5. Towing vehicle (10) according to one of the preceding claims, **characterized in that** the drive unit (32) comprises an actuable clutch (40).

6. Towing vehicle (10) according to one of the preceding claims, **characterized in that** the pressure source (34) comprises a compressed air compressor (42).

7. Towing vehicle (10) according to one of the preceding claims, **characterized in that** sensor means (46) which are connected to the pressure source (34) and to the control unit (38) are provided, as a function of which sensor means (46) the drive unit (32) can be actuated by the control unit (38).

8. Towing vehicle (10) according to Claim 6, **characterized in that** the sensor means (46) comprise a pressure-regulating valve (48) and/or a pressure switch (50).

## Revendications

1. Véhicule de traction (10) comprenant un dispositif d'accouplement du côté du véhicule (14), pour l'accouplement d'un dispositif d'accouplement du côté de la remorque d'une installation de freinage de remorque, une source de pression (34) pour l'installation de freinage de remorque pouvant être entraînée par une unité d'entraînement commandable (32) et une unité de commande électronique (38), pour commander l'unité d'entraînement (32), **caractérisé en ce que** le dispositif d'accouplement du côté du véhicule (14) comprend un premier capteur (28) connecté à l'unité de commande (38), avec lequel un accouplement d'un dispositif d'accouplement du côté de la remorque au dispositif d'accouplement du côté du véhicule (14) peut être détecté et en fonction duquel l'unité d'entraînement (32) peut être commandée par l'unité de commande (38).

2. Véhicule de traction (10) selon la revendication 1, **caractérisé en ce que** le dispositif d'accouplement du côté du véhicule (14) comprend un deuxième capteur (30) connecté à l'unité de commande (38), avec lequel un accouplement d'un dispositif d'accouplement du côté de la remorque au dispositif d'accouplement du côté du véhicule (14) peut être détecté.

3. Véhicule de traction (10) selon l'une quelconque des revendications précédentes, **caractérisé en ce qu'**un dispositif de signal (52) est prévu, lequel peut être commandé par l'unité de commande (38).

4. Véhicule de traction (10) selon l'une quelconque des revendications précédentes, **caractérisé en ce que** l'unité d'entraînement (32) comprend un entraînement hydraulique, électrique ou mécanique (36).

5. Véhicule de traction (10) selon l'une quelconque des revendications précédentes, **caractérisé en ce que** l'unité d'entraînement (32) comprend un accouplement commandable (40).

6. Véhicule de traction (10) selon l'une quelconque des revendications précédentes, **caractérisé en ce que** la source de pression (34) comprend un compresseur d'air comprimé (42).

7. Véhicule de traction (10) selon l'une quelconque des revendications précédentes, **caractérisé en ce que** des moyens de capteur (46) connectés à la source de pression (34) et à l'unité de commande (38) sont prévus, en fonction desquels une commande de l'unité d'entraînement (32) peut être effectuée par l'unité de commande (38).

8. Véhicule de traction selon la revendication 6, **caractérisé en ce que** les moyens de capteur (46) comprennent une soupape de régulation de pression (48) et/ou un commutateur de pression (50).
